Europäisches Patentamt

European Patent Office

Office européen des brevets

(11) Publication number : **0 614 135 A1**

(12) **EUROPEAN PATENT APPLICATION**

(21) Application number : **93203613.0**

(22) Date of filing : **21.12.93**

(51) Int. Cl.$^5$ : **G05D 9/02,** G05D 7/01, A47K 3/22

(30) Priority : **21.12.92 NL 9202221**

(43) Date of publication of application : **07.09.94 Bulletin 94/36**

(84) Designated Contracting States : **DE FR NL**

(71) Applicant : **Verenigde Bedrijven Groeneveld B.V.**
**Bessemerstraat 9**
**NL-3316 GB Dordrecht (NL)**

(72) Inventor : **de Leeuw, Nicolaas Antonie**
**Henegouwerweg 17**
**NL-2741 KS Waddinxveen (NL)**

(74) Representative : **Boelsma, Gerben Harm, Ir.**
**Octrooibureau Polak & Charlouis**
**Laan Copes van Cattenburch 80**
**NL-2585 GD Den Haag (NL)**

(54) **Liquid dispensing reservoir having a flow rate that is independent of the liquid level.**

(57) The invention relates to a liquid dispensing reservoir (1) with an outlet (3) opening provided in the (bottom) wall of the same. The outlet (3) opening merges into an auxiliary reservoir (4) located under the (main) reservoir (1), that is provided with an auxiliary outlet opening (3) and accommodates a float type valve body (6) that cooperates with the outlet opening (3) of the main reservoir (1). The sizes of the two outlet (3,5) opening are such that with the main reservoir (1) at least filled to a minimum level (III) and the auxiliary outlet (5) opening in the opened position, a substantially constant liquid level will be set within the auxiliary reservoir (4) due to the valve body (6) causing a regulated flow of liquid to discharge from the main reservoir (1).

EP 0 614 135 A1

The invention relates to a liquid dispensing reservoir with an outlet opening provided in the (bottom) wall of the same.

As is known, the quantity Q per time unit flowing through an opening in a wall of a liquid reservoir is dependent on the liquid level h above the level of the outlet opening, according to the flow rate formula

$$Q = mF\sqrt{2}\,gh,$$

in which F represents the cross-sectional area of the outlet opening and m is a contraction factor, the latter having the value 1 when the outlet opening has been rounded off on the inner side.

To cause a reservoir loaded with a certain amount of liquid to empty with a (substantially) constant liquid flow or, more generally, to cause a (substantially) constant liquid flow rate from a reservoir having a varying liquid level, the effective cross-sectional area of the outlet opening would have to be varied inversely proportional to the square root of the liquid level.

It would be difficult to realize such a variation with means, which sense the liquid level within the reservoir to control a valve, that controls the cross-sectional area of the outlet opening.

In view of the fact that relatively low pressures are involved here, no use can be either made of existing flow restrictors, as these restrictors are designed to operate under relatively high pressures; moreover such restrictors are relatively expensive.

The present invention aims at providing a liquid dispensing reservoir, wherein constructionally simple and effective means allow to obtain a substantially constant outlet flow with a varying and in particularly a decreasing liquid level in the (main) reservoir.

According to the invention this aim is achieved, in that the outlet opening merges into an auxiliary reservoir located under the (main) reservoir, said auxiliary reservoir having an auxiliary outlet opening and containing a float type valve body that cooperates with the outlet opening of the main reservoir, the sizes of the two outlet openings being such that with the main reservoir at least filled to a minimum level and the auxiliary outlet opening in the opened position, a substantially constant liquid level will be set within the auxiliary reservoir due to the valve body causing a regulated flow of liquid to discharge from the main reservoir.

The substantially constant liquid level within the auxiliary reservoir secures a correspondingly constant outlet flow through the outlet opening of said reservoir.

The liquid dispensing reservoir according to the invention is particularly suitable for use as a water reservoir in places, where people may get into contact with aggressive chemical material or clothing may easily burst into flames. In such places an emergency shower is often required which may be fed from the dispensing reservoir in the absence of a water supply system. In practice such emergency showers are distinguished in eye-, face- and splash showers. With splash showers, which are intended to spray off the whole human body, the requirement has to be fulfilled that with a fixed shower head at least about 115 litres of water per minute is supplied to the shower head during fifteen minutes.

A water dispensing reservoir according to the invention is capable of fulfilling this requirement during the full fifteen minutes with a (main) reservoir capacity which is substantially smaller than that of a reservoir without the outflow restrictor according to the invention viz. of a reservoir that would have to feed the splash shower during the first fourteen minutes with a substantial excess of water so as to achieve that the water outlet which is decreasing as a result of the decreasing water level, would, during the last minute, still deliver the required minimum amount.

In a practical embodiment the auxiliary reservoir is integrally formed with the main reservoir, a vent being provided adjacent the transition between the main reservoir and the auxiliary reservoir.

A preferred embodiment of the dispensing reservoir according to the invention is characterized in that in addition to the outlet opening of the main reservoir one or more openings are provided which permanently connect the main reservoir with the auxiliary reservoir, said openings having a combined cross-section which is substantially smaller than that of the outlet opening of the auxiliary reservoir. Such openings contribute to a uniform supply of water to the auxiliary reservoir from the main reservoir and enable to reduce the size of the valve body.

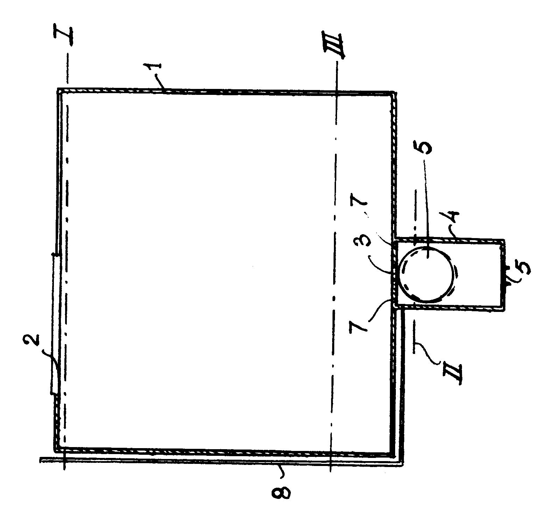

The invention will be hereinafter explained by way of example with reference to the drawing.

The drawing shows a diagrammatic vertical section through a liquid dispensing reservoir according to the invention; in the example shown it is formed by a substantially cylindrical main reservoir 1 having a diameter of 1450 mm and a height of 1220 mm. The reservoir 1 is accessible through a manhole 2.

In consideration of the indicated measures the volume of the main reservoir is 2000 litres.

In the bottom of the reservoir 1 there is provided an outlet opening 3 having a diameter of 40 mm, that merges into the space of an auxiliary reservoir 4 provided underneath onto the bottom of the reservoir 1. The auxiliary reservoir has a diameter of 250 mm and a height of 390 mm, and an outlet opening 5 having a diameter of 31,5 mm is provided in the bottom of this auxiliary reservoir.

Within the auxiliary reservoir 4 there is provided a spherical body 6 formed e.g. of polystyrene and having a diameter of 200 mm, said body acting as a float valve and functioning to control the water flow through the outlet opening 3.

Around the central outlet opening 3 of the main reservoir 1-adjacent the circumferential wall of the auxiliary reservoir 4 - there are four outlet openings 7 with a diameter of 10 mm. 8 is a vent conduit acting also as a gauge glass, which merges into the wall of the auxiliary reservoir 4 just below the bottom of the auxiliary reservoir 1 and extends to a location just over the upper wall of the main reservoir 1.

The operation of the above described dispensing reservoir is as follows:

In the ready-for-use condition the main reservoir 1 and the auxiliary reservoir 4 - the latter in permanent hydraulic communication with the former through the openings 7 - are completely filled with water, while the outlet opening 5 is closed (vide level I in the drawing). The upward pressure acting on the float valve 6 urges the latter into sealing contact with the mouth of the outlet opening 3 of the main reservoir 1. At the moment the outlet opening 5 is released the whole behaves as a single reservoir with a liquid level that corresponds with the sum of the liquid levels within the main reservoir and the auxiliary reservoir. Due to this the outflow through the opening 5 will get going in a quick manner. Immediately upon starting the outflow, however, a separation will take place between the water volumes in the two reservoirs 1 and 4 due to the fact that the substantial difference in cross-sectional area between the openings 7 on one hand and the outlet opening 5 on the other hand will cause the water to flow out of the auxiliary reservoir 4 at a higher rate than water may supplied from the main reservoir 1 through the openings 7 into the auxiliary reservoir 1. As a result of the decreasing water level within the auxiliary reservoir 1 the upward pressure onto the float valve 6 and thereby the closing pressure will decrease until the float valve will start floating and get released from the mouth of the outlet opening 3 of the main reservoir 1. At that moment the partially opened outlet opening 3 will cause such an additional amount of water to be supplied to the auxiliary reservoir 4, that the amount of water flowing out of the auxiliary reservoir 4 will be equal to the amount of water that flows jointly through the openings 7 and the partially opened outlet opening 3 from the main reservoir 1 into the auxiliary reservoir 1.

It has been found that with a dispensing reservoir of the size above referred to the water level within the auxiliary reservoir 4 will adjust itself at a level (vide the level II), that slightly fluctuates about a value of about 350 mm and that this value remains substantially constant during the whole outlet period of 15 minutes for which the dispensing reservoir has been designed in this example. Consequently the rate of flow during this outlet period is also substantially constant and is as high as 113,6 l/min., while after the fifteenth minute (at a level III in the main reservoir 1) there will be a rest amount of water of about 275 litres.

If - in accordance with the practice so far - the auxiliary reservoir 4 would be taken away and the openings 7 and the outlet opening 3 would be substituted by a single outlet opening having a diameter of 31,5 mm (corresponding to that of the outlet opening of the auxiliary reservoir), 210 litres of water would be delivered in the first minute, whereas the required minimum amount (of about 115 l/min.) would just be delivered in the nineth minute and only 45 litres of water would be delivered in the fifteenth minute yet.

It will be understood that the invention is not limited to the above described example. Other measures will enable to get a constant rate of flow during longer or shorter periods of time.

More generally the invention is applicable in cases, wherein an irregular supply flow, involving a varying liquid level, must be transferred into a substantial constant outlet flow.

## Claims

1. A liquid dispensing reservoir with an outlet opening provided in the (bottom) wall of the same, characterized in that the outlet opening merges into an auxiliary reservoir located under the (main) reservoir, said auxiliary reservoir having an auxiliary outlet opening and containing a float type valve body that cooperates with the outlet opening of the main reservoir, the sizes of the two outlet openings being such that with the main reservoir at least filled to a minimum level and the auxiliary outlet opening in the opened position, a substantially constant liquid level will be set within the auxiliary reservoir due to the valve body causing a regulated flow of liquid to discharge from the main reservoir.

2. A liquid dispensing reservoir according to claim 1, characterized in that the auxiliary reservoir is integrally formed with the main reservoir, a vent being provided adjacent the transition between the main reservoir and the auxiliary reservoir.

3. A liquid dispensing reservoir according to claims 1-2, characterized in that in addition to the outlet opening of the main reservoir one or more openings are provided which permanently connect the main reservoir with the auxiliary reservoir, that opening having a combined cross-section which is substantially smaller than that of the outlet opening of the auxiliary reservoir.

4. A liquid dispensing reservoir according to claim 2 and 3, characterized in that a vent conduit merges into the auxiliary reservoir and extends to the (maximum) liquid level in the main reservoir.

5. A liquid dispensing reservoir according to claim 4, characterized in that the vent conduit is formed as a gauge glass.

6. A liquid dispensing reservoir according to claims 1-5, characterized in that the valve body is formed as a spherical float valve.

**European Patent Office**

## EUROPEAN SEARCH REPORT

Application Number

EP 93 20 3613

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | DE-C-572 892 (SPICERS LTD)<br>* the whole document *<br>--- | 1 | G05D9/02<br>G05D7/01<br>A47K3/22 |
| X | US-A-4 328 820 (SERUR) | 1 | |
| Y | * column 2, line 58 - column 4, line 6; figures 1,2 *<br>--- | 2,6 | |
| Y | DE-A-22 39 484 (HELMUT BOHLÄNDER AG)<br>* page 7, line 23 - page 8, line 18; figure 1 *<br>--- | 2,6 | |
| A | DE-B-10 46 352 (VEB THÜRINGISCHES KUNSTFASERWERK "WILHELM PIECK")<br>* the whole document *<br>--- | 1 | |
| A | US-A-3 675 251 (RUSCHER)<br>--- | | |
| A | DE-U-87 17 309 (IMIG)<br>----- | | |

| | |
|---|---|
| | **TECHNICAL FIELDS SEARCHED (Int.Cl.5)**<br><br>G05D<br>A47K |

The present search report has been drawn up for all claims

| Place of search | Date of completion of the search | Examiner |
|---|---|---|
| THE HAGUE | 25 April 1994 | Porwoll, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)